(19) Europäisches Patentamt / European Patent Office / Office européen des brevets

(11) **EP 3 117 713 B1**

(12) **EUROPEAN PATENT SPECIFICATION**

(45) Date of publication and mention
of the grant of the patent:
**12.09.2018 Bulletin 2018/37**

(51) Int Cl.:
**A23C 9/18** (2006.01)

(21) Application number: **16187350.0**

(22) Date of filing: **25.12.2009**

(54) **METHOD FOR MANUFACTURING SOLID MILK**

VERFAHRUNG ZUR HERSTELLUNG FESTER GEPRESSTER MILCH

PROCÉDÉ DE FABRICATION DU LAIT EN FORME SOLIDE

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **26.12.2008 JP 2008335155**

(43) Date of publication of application:
**18.01.2017 Bulletin 2017/03**

(62) Document number(s) of the earlier application(s) in
accordance with Art. 76 EPC:
**09834530.9 / 2 369 941**

(73) Proprietor: **Meiji Co., Ltd.**
**Tokyo 136-0075 (JP)**

(72) Inventors:
• **TOYODA, Ikuru**
**Odawara-shi, Kanagawa 250-0862 (JP)**
• **SHIBATA, Mitsuho**
**Odawara-shi, Kanagawa 250-0862 (JP)**
• **OHTSUBO, Kazumitsu**
**Odawara-shi, Kanagawa 250-0862 (JP)**

(74) Representative: **Atkins, James Gordon John et al**
**Kilburn & Strode LLP**
**Lacon London**
**84 Theobalds Road**
**London WC1X 8NL (GB)**

(56) References cited:
EP-A1- 1 769 682     WO-A1-2007/077970
WO-A2-2008/129035    JP-A- 2008 048 747
JP-A- 2008 048 749    US-A- 2 949 363

• DATABASE GNPD [Online] MINTEL; 1 January
2008 (2008-01-01), Anonymous: "Crispy Milk",
XP002685002, retrieved from www.gnpd.com
Database accession no. 989559
• DATABASE WPI Week 197408 Thomson
Scientific, London, GB; AN 1974-14744V
XP002685001, & JP 49 004948 B (SNOW BRAND
MILK PRODS CO) 4 February 1974 (1974-02-04)
• NEFF ET H A L MORRIS E: "Agglomeration of
MilkPowder and Its Influence on Reconstitution
Properties", JOURNAL OF DAIRY SCIENCE,
AMERICAN DAIRY SCIENCE ASSOCIATION, US,
vol. 51, no. 3, 1 March 1968 (1968-03-01), pages
330-338, XP009163547, ISSN: 0022-0302
• HEGEDUSIC V ET AL: "Influence of particle size
on the solubility and the dispersibility of dried
milk and cocoa powder. (translated)", HRANA I
ISHRANA - FOOD AND NUTRITION, BEOGRAD,
YU, vol. 25, no. 1/2, 1 January 1984 (1984-01-01),
pages 25-28, XP009163552, ISSN: 0018-6872
• A. H. BOCKIAN ET AL: "FACTORS AFFECTING
THE DISPERSIBILITY OF "INSTANTLY
DISSOLVING" DRY MILKS", JOURNAL OF FOOD
SCIENCE, vol. 22, no. 1, 1 January 1957
(1957-01-01), pages 69-75, XP055040632, ISSN:
0022-1147, DOI:
10.1111/j.1365-2621.1957.tb16984.x
• GAIANI C ET AL: "Dairy Powder Rehydration:
Influence of Protein State, Incorporation Mode,
and Agglomeration", JOURNAL OF DAIRY
SCIENCE, AMERICAN DAIRY SCIENCE
ASSOCIATION, US, vol. 90, no. 2, 1 February 2007
(2007-02-01), pages 570-581, XP026955709, ISSN:
0022-0302 [retrieved on 2007-02-01]

- H. SCHUBERT: "Food particle technology. Part I: Properties of particles and particulate food systems", JOURNAL OF FOOD ENGINEERING, vol. 6, no. 1, 1 January 1987 (1987-01-01) , pages 1-32, XP055040477, ISSN: 0260-8774, DOI: 10.1016/0260-8774(87)90019-7

- HOGEKAMP S ET AL: "Rehydration of food powders", FOOD SCIENCE AND TECHNOLOGY INTERNATIONAL, SAGE PUBLICATIONS, NEW YORK, NY, US, vol. 9, no. 3, 1 June 2003 (2003-06-01), pages 223-235, XP009163553, ISSN: 1082-0132, DOI: 10.1177/1082013203034938

**Description**

**Technical Field**

This application claims a convention priority based on the Japanese Patent Application No, 2008-335155.
The present invention relates to a method for manufacturing of solid milk with better water solubility by using powdered milk with large particle diameter.

**Background Art**

Japanese Patent Publication No.4062357 (the patent document 1 described below) discloses a manufacturing method of solid milk after obtaining homogeneous powdered milk. Specifically, in this publication solid milk is obtained by using powdered milk including predefined amount of free fat, removing powdered milk having large particle diameter in a sieving process, and using granulated powdered milk (See chapter 3.1.6 sieving process in this publication). Meanwhile, generally solid milk has less water solubility than powdered milk since solid milk has small surface area and less porosity compared to powdered milk. In addition, basically the method described in this publication is not suitable in case of less free fat or fat content rate.
Patent Document 1 Japanese Patent Publication No.4062357 WO 2007/077970 discloses a method of making solid milk which includes compressing/compacting powdered milk, humidifying compressed powdered milk and a drying step. The method includes a sieving step in which milk particles having a large diameter are removed.

**Disclosure of the Invention**

**Problems to be Solved by the Invention**

It is an object of the present invention to provide a method for manufacturing solid milk which has better water solubility and keeping hardness.
Specifically, it is an object of the present invention to provide a method for manu-facturing solid milk having better water solubility and keeping hardness although powdered milk having especially less free fat or fat content rate and molding difficulties is used.

**Means for Solving Problems**

As noted above, in the prior art solid milk is produced by using powdered milk having small particle diameter which passed a sieve. The present invention is fundamentally based on the knowledge that solid milk having better water solubility and keeping hardness can be obtained by using daringly powdered milk with large particle diameter which was sieved and has not been used in the manufacture of solid milk in the prior art.
The first aspect of the present invention relates to a method for manufacturing solid milk comprising a classification process for obtaining powdered milk having larger particle diameter than prescribed particle diameter by classifying powdered milk which is an ingredient of solid milk, wherein the classification process is a process for using a sieve the mesh size of which is 200 micrometers to 700 micrometers; a compaction molding process for obtaining a compaction molded body of the powdered milk remaining on the sieve after the classification process; a humidification process for humidifying the compaction molded body of the powdered milk after the compaction molding process, wherein the humidification process is carried out in a high humidity environment, the high humidity environment being 60 percent RH to 100 percent RH; and a drying process for drying the compaction molded body of the powdered milk after the humidification process.
The present invention of a desirable manufacturing method of solid milk serves to use a sieve having between 200 micrometers and 700 micrometers (both including) of sieve mesh size. Namely, powdered milk with large particle diameter remaining on a sieve after classifying powdered milk by using a sieve having a prescribed sieve mesh size is daringly used. As demonstrated by Example 1, by adopting this method, solid milk with better solubility and hardness can be obtained although yield or yield rate of a product is declined.
The present invention of a desirable manufacturing method of solid milk serves to classify powdered milk as an ingredient of solid milk for having 1.3 times to 3.6 times (both including) of the average particle diameter of powdered milk at the classification process. As demonstrated by Example 1, by adopting this method, solid milk with better solubility and hardness can be obtained although yield or yield rate of a product is declined. Furthermore, average particle diameter is defined by described Test Examples below.
The present invention of a desirable manufacturing method of solid milk is a manufacturing method of solid milk having no free fat or having 0.5 wt percent or less of content rate of free fat. In this case, preferably powdered milk having zero fat content rate or 5 wt percent or less of fat content rate is used.

As demonstrated by Examples 2 and 3, in the present invention of manufacturing method of solid milk, hardness or solubility of obtained solid milk can be enhanced specifically in case of powdered milk having low free fat. In addition, in the above-mentioned embodiments the hardness and solubility can accordingly be combined and used.

In this present invention, powdered milk having for example 0.5 wt percent - 4 wt percent of free fat, preferably 0.5 wt percent - 3 wt percent of free fat can be used. In this case, powdered milk having 5 wt percent - 70 wt percent of fat content rate can be used. By using powdered milk having a lot of free fat, free fat in powdered milk can be performed as a lubricant or an adhesive.

Also disclosed herein is solid milk produced by any one of the abovementioned manufacturing method.

Solid milk may have between 1.6 times and 3.3 times (both including) of pore area of solid milk surface compared to the pore area of solid milk surface produced under the same condition except for using no classified powdered milk, namely produced except for having the classification process. Here, the pore area means an average value of top three large pore areas which are selected from a one mm square on the surface of the abovementioned solid milk. As demonstrated by Example 1, by obtaining solid milk having pore area within a range of abovementioned, the solid milk with better solubility and hardness can be obtained although yield or yield rate of a product is declined.

### Effect of the invention

According to the present invention, a method for manufacturing solid milk having better water solubility and keeping hardness can be provided.

According to the present invention, although powdered milk, which has especially low free fat and is difficult to be molded, is used, a method for manufacturing solid milk having better water solubility and keeping hardness can be provided.

### Brief Description of Drawings

[fig.1]Fig. 1 is a flowchart for describing a method for manufacturing solid milk in accordance with the present invention.

[fig.2]Fig. 2 is a flowchart for explaining the powdered milk manufacturing process.

[fig.3]Fig. 3A shows a photograph instead of a figure indicating the surface of the solid milk manufactured from the non-classified powdered milk. Fig. 3B shows a photograph instead of a figure indicating the surface of the solid milk manufactured from the classified powdered milk.

[fig.4]Fig. 4 shows a graph instead of a figure for indicating the mesh size of the sieves, the average pore area of the surface of solid milk, and a relationship between the mesh size of sieves and solubility.

[fig.5] Fig. 5 shows a graph instead of a figure for indicating a relationship between mesh size of sieves and yield rate of the classified powdered milk on the sieve.

[fig.6]Fig. 6 shows a graph instead of a figure for indicating a relationship between the average pore area of the solid milk surface (the result of the first test method) and solubility.

[fig.7]Fig. 7 shows a graph instead of a figure for indicating the scores under the various conditions in a solubility test in Embodiment 4.

### Best Mode for Carrying out the Invention

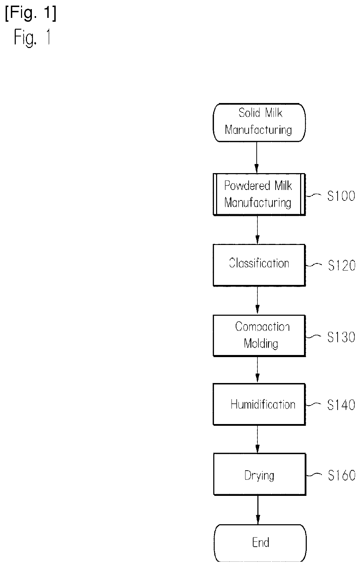

Hereinafter, the best embodiments to carry out the present invention will be described. Fig. 1 is a flowchart for describing the present invention of a method for manufacturing solid milk. S in each Fig. means a manufacturing process (step).

The method of manufacturing solid milk produces schematically solid milk from the powdered milk in the form of a solid which is produced from milk or modified milk in the form of liquid including water (liquid milk). As illustrated by Fig. 1, an example of a method for manufacturing solid milk includes a powdered milk manufacturing process (S100), a classification process (S120), a compaction molding process (S130), a humidification process (S140), and a drying process (S160).

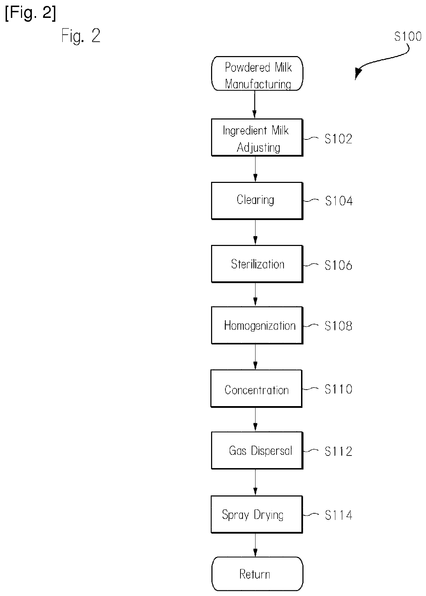

In the powdered milk manufacturing process (S100) powdered milk is produced from liquid milk. Liquid milk as an ingredient of powdered milk includes at least milk constituent (for example, nutrient component of milk), and, for instance, water content rate of liquid milk is 40 wt percent - 95 wt percent. On the other hand, in the powdered milk produced from the liquid milk, for example water content rate of powdered milk is 1 wt percent - 4 wt percent. This is because when the powdered milk contains a lot of water, the preservative quality becomes worse and easy for deterioration in the flavour and the discoloration of externals to progress. The details of this process will be described below by using Fig. 2.

The classification process (S120) is a process for classifying the powdered milk at every particle diameter. In the present invention, the powdered milk having larger particle diameter than prescribed particle diameter is obtained by classfying. The classification process (S120) is a process for extracting (selecting) powdered milk having in range of necessary particle diameter by classifying the powdered milk obtained by the powdered milk manufacturing process (S100) by each particle diameter. In order to classify the powdered milk by each particle diameter, for instance, all the powdered milk should be passed through or set on plural sieves having different sieve mesh sizes (sieving). Specifically, by setting all the powdered milk on a sieve having a large sieve mesh size, the powdered milk having smaller particle diameter than the mesh size of the sieve is passed through the sieve, and the powdered milk having a larger particle diameter than the mesh size of the sieve is remained on the sieve. In this way, the powdered milk having a small particle diameter is removed. Therefore, on the sieve, the powdered milk having larger particle diameter than the predefined particle diameter is remained. Thus, the average particle diameter of the powdered milk becomes larger by the classification. Additionally, in the present process, the powdered milk having too large particle diameter (mass powder, coagula, etc) can be removed from the powder milk obtained in the aforementioned by using a larger mesh size of a sieve than the abovementioned mesh size of the sieve.

Furthermore, in the present embodiment powdered milk obtained by the spray drying process was classified, however the powdered milk which has been already produced (for example, the powdered milk on the market) can be classified. Additionally, a filling process can be performed after the classification process (S120) as needed. In this filling process the powdered milk is filled in a package or a can and so on. This helps to transport the powdered milk easily.

The compaction molding process (S130) is a process for obtaining a solidified compaction molded body of powdered milk by compaction molding (for example, tableting) powdered milk produced at the powdered milk manufacturing process (S100) and classified under relatively low compaction pressure. This leads to keep a certain degree of good silhouette of the compaction molded body of powdered milk to move towards the subsequent process, and secure many air gaps for approaching water (solvent). Namely, if a certain degree of good silhouette of the compaction molded body of powdered milk is not kept, there is a possibility that the compaction molded shape can not be kept at the subsequent process. Moreover, this porosity of the compaction molded body of powdered milk is defined by the number and the size of air gaps, and closely relates to the solubility of solid milk.

As an ingredient of the compaction molding process, for example, only powdered milk produced by the powdered milk manufacturing process (S100) without any substantial addictives can be used. Namely, powdered milk without adding additive can be used. The additives mean an adhesive, a disintegrant, a lubricant, an expansion agent and so on, and nutrient components are excluded from the additives. However, the additives may be used as an ingredient of powdered milk if the additive amount is for example 0.5 wt percent like additive amount that does not influence the nutrient component of solid milk. In this case, powdered milk having for example 0.5 wt percent - 4 wt percent of free fat can be used. This leads that free fat in powdered milk can be performed as a lubricant or an adhesive.

In the compaction molding process, in order to obtain a solidified compaction molded body of powdered milk from powdered milk, a compaction means is used. A pressured molding machine such as a tableting machine or a compression testing machine is an example of the compaction means. The tableting machine comprises a die as a mold for powdered milk (powder) and a punch for hitting to the die. Further, powdered milk is introduced into the die (mold) and is hit by the punch, and then a compaction molded body of powdered milk can be obtained by compaction pressure. In addition, in the compaction molding process it is desirable to compact powdered milk continuously.

In the compaction molding process, ambient temperature is not specifically regulated. For example, this process can be carried out at room temperature. More specifically, ambient temperature in the compaction molding process can be 10 degrees C to 30 degrees C. Ambient humidity can be, for example, 30 percentsRH to 50 percentsRH. The compacting force is for example 1 MPa to 30 MPa (preferably 1 MPa to 20 MPa). In this embodiment when powdered milk is solidified, preferably the porosity is controlled within a range of 30 percents to 60 percents, and hardness of the compaction molded body of powdered milk is controlled within a range of 6N to 22N by adjusting within a range of 1 MPa to 30 MPa of compacting pressure. This leads to produce high utility solid milk having both solubility and convenience (easily handled). Moreover, as hardness of the compaction molded body of powdered milk, hardness should be at least a certain degree for keeping good silhouette (not losing shape) at the subsequent humidification process and drying process (for example 4 N).

The humidification process (S140) is a process for humidifying the compaction molded body of powdered milk obtained by the compaction molding process (S130). When the compaction molded body of powdered milk is humidified, the tackiness is generated on a surface of the compaction molded body of powdered milk. As a result, wetting the compaction molded body of powdered milk partially dissolves and bridges together the particles located close to the surface of the compaction molded body of powdered milk. And, as drying the compaction molded body of powdered milk, the strength close the surface of the compaction molded body of powdered milk can be increased compared to the strength of the inner of the compaction molded body of powdered milk. In the present embodiment a degree of bridges (expansion condition) is adjusted by adjusting time putting under high humid environment (humidification time). Thus hardness of the compaction molded body of powdered milk (uncured solid milk) before the humidification process (for example, 6 N to 22 N) can be enhanced to the necessary and purposed hardness for solid milk (for example, 40 N). However, a range of the enhanced hardness by adjusting humidification time is limited. Namely, when transporting the compaction molded body of powdered milk by a conveyer belt to humidify it after compaction molding, the shape of the solid milk can not be kept in case of insufficient hardness of the compaction molded body of powdered milk. On the other hand, only solid milk with small porosity and poor solubility is obtained if hardness of the compaction molding body of the powdered milk is too enough at the time of compaction molding. Therefore, preferably it is compaction molded for having enough hardness of the compaction molded body of powdered milk (uncured solid milk) before the humidification process and keeping enough solubility of solid milk.

The humidification process is carried out in a high-humidity environment. In order to humidify the compaction molded body of powdered milk, the examples of humidification means include a high-humidity chamber, a sprayer, and steam.

Humidity of the high-humidity environment is, 60 percents RH to 100 percents RH. The humidification time is, for example, 5 sec to 1 h and the temperature in the method of placing under high-humidity environment is, for example, 30 degrees C to 100 degrees C.

The amount of moisture (also referred to herein below as humidification amount) added to the compacted body of powdered milk in the humidification process may be appropriately adjusted. Preferably humidification amount is set to 0.5 wt percent to 3 wt percent of the compaction molded body of powdered milk after the compaction molding process. If the humidification amount is set to less than 0.5 wt percent, hardness (tablet hardness) of solid milk is not enough. On the other hand, if the humidification amount is set to more than 3 wt percent, the compaction molded body of powdered milk is melted into liquid state or gelled state, further compaction molded shape is changed or it adheres to a machine such as a conveyer belt during transporting.

The drying process (S160) is a process for drying the compaction molded body of powdered milk humidified at the humidification process (S140). Because the compacted molded body of powdered milk that was humidified in the humidification process is dried in the drying process, surface tackiness is eliminated and the solid milk can be handled as a product. Thus, the humidification process and the drying process correspond to a process for adjusting to be necessary quality of solid milk as a product.

Well-known methods capable of drying the compacted molded body of powdered milk that was humidified in the humidification process can be employed as drying methods that are not specifically limited in the drying process. Examples of suitable methods include a method of placing under a low-humidity and high-temperature atmosphere and a method of bringing into contact with dry air or high-temperature dry air.

Humidity in the method involving placing under a low-humidity and high-temperature atmosphere is, for example, 0 percents RH to 30 percents RH. It is thus preferred that humidity is set to as a low level as possible. Temperature in the method involving placing under a low-humidity and a high-temperature atmosphere is 20 degrees C to 150 degrees C. Drying time in the method involving placing under a low-humidity and a high-temperature atmosphere is 0.2 min to 2h.

By the way, if the moisture content of solid milk is increased, preservative quality becomes worse and it is easy for deterioration in the flavour and the discoloration of externals to progress. For this reason, in the drying process, the moisture content ratio of the solid milk is controlled to be no more than 1 percent higher or lower than the moisture content ratio of the powdered milk used as the ingredient.

The solid milk is generally dissolved in warm water and drunk. More specifically, warm water is poured into a container provided with a lid and then the necessary number of pieces of the solid milk is placed therein. Or, the pieces of the solid milk are placed into the container and then the warm water is poured therein. It is preferred that the solid milk be rapidly dissolved by lightly shaking the container and drunk in a state with an appropriate temperature. Further, when one or more than two pieces of the solid milk (more preferably, one piece of solid milk) is dissolved in warm water, a volume of solid milk can be adjusted to be necessary amount of liquid milk for one drinking. For example the volume of solid milk is 1 cm$^3$ to 50 cm$^3$. The volume of the solid milk can be adjusted by changing amount of powdered milk which is used at the compaction molding process.

Details of solid milk are described following. The components of solid milk are basically identical to those of powdered milk serving as an ingredient. Examples of solid milk components include fats, carbohydrate, proteins, minerals, vitamins, and water.

There are many air gaps (for example, pores) in the solid milk. These plural pores are preferably dispersed (distributed) uniformly in the solid milk. Because the pores are uniformly distributed in the solid milk, the solid milk is uniformly dissolved and a higher solubility can be obtained. The larger (wider) the pores are, the easier the solvent such as water penetrates therein and a high solubility can be obtained. On the other hand, if the pore size is too large, strength decreases or the surface of solid milk becomes rough. Accordingly, the pore size is for example 10 micrometers to 500 micrometers. Such pore size or dispersal of many air gaps can be measured by well-known means, for example, by observing the surface and cross section of solid milk with a scanning electron microscope. By these measurements porosity of solid milk can be defined.

The solid milk disclosed herein has a porosity of for example 30 percents to 60 percents. The higher the porosity is, the higher the solubility is, but the lower the strength is. Furthermore, if the porosity is small, solubility decreases. The porosity is mainly controlled by adjusting the compaction pressure for example in the compacting process.

Specifically, the lower the compaction pressure is, the higher the porosity is, while the higher the pressure is, the lower the porosity is. A porosity of the solid milk thus can be controlled, therefore it is not limited within a range of 30 percents to 60 percents, and then the porosity is appropriately adjusted as its usage. As described below, if the porosity is within those ranges, good solid milk free from problems of oil-off or the like can be obtained.

The shape of the solid milk is defined by the shape of the die (mold) employed for compaction molding, but it is not specifically limited if it has a certain size. Thus, the solid milk may have the shape of round rods, elliptical rods, rectangular parallelepipeds, cubes, plate, balls, polygonal rods, polygonal cones, polygonal pyramids, and polyhedrons. From the standpoint of convenience of molding and transporting, the shape of round rods, elliptical rods, or rectangular parallelepipeds is preferred. Furthermore, in order to prevent the solid milk from fracturing during transportation, it is preferred that the corner portions be rounded.

The solid milk has to have certain solubility in a solvent such as water. The solubility can be evaluated by a time of dissolving solid milk perfectly or remaining amount (dissolution residue of mass described below in embodiments) in a prescribed time for example when solid milk as a solute and water as a solvent is prepared for a specified level.

The solid milk has to have certain hardness (strength) to prevent it from fracturing during transportation. In this case, the solid milk preferably has a hardness of 31 N or higher, preferably 40 N or higher. On the other hand, from the standpoint of solubility, the maximum hardness of solid milk is for example 300 N, preferably 60 N. Further, the hardness of solid milk can be measured by well-known methods.

The preferable solid milk of the present invention is the solid milk having between 1.2 times and 2.5 times (both including) of pore area of solid milk surface (preferably between 1.8 times and 2.5 times, or between 2 times and 2.5 times) compared to the pore area of solid milk surface produced under the same condition except for using no classified powdered milk and having the classification process. As demonstrated by Embodiment 1, by obtaining solid milk having pore area within a range of above-mentioned, the solid milk with better solubility and hardness can be obtained although yield or yield rate of a product is declined.

Now the powdered milk manufacturing process is described in detail. Fig. 2 is a flowchart for explaining in detail the powdered milk manufacturing process described in S100 of Fig. 1. The powdered milk manufacturing process is corresponding to the manufacturing method of powdered milk of the present invention.

In general, by modifying, concentrating, and drying liquid milk including water (ingredient milk), powdered milk for the above mentioned compaction molding process (S130) is produced. The powdered milk manufacturing process includes an ingredient milk adjusting process (S102), a clearing process (S104), a sterilization process (S106), a homogenization process (S108), a concentration process (S110), a gas dispersal process (S112), and a spray drying process (S114) as illustrated in Fig. 2.

The ingredient milk adjusting process (S102) is a process for adjusting liquid milk as an ingredient of powdered milk. Therefore, liquid milk as an ingredient of powdered milk includes at least milk constituent (for example milk component) for example water content rate of the liquid milk is 40 wt percent to 95 wt percent. When manufacturing adjusted powdered milk as powdered milk, nutrient component as ingredient of powdered milk is added into the abovementioned liquid milk. Further, ingredients of powdered milk may comprise only milk constituent, such as raw milk (whole fat milk), defatted milk, and cream. In this case, the ingredient milk adjusting process can be skipped if needed.

Milk is used as an ingredient for the abovementioned powdered milk. Fresh milk can be used as the milk. More specifically, milk from cows (Holstein cows, Jersey cows, and the like), goats, sheep, and buffalos can be used. Fat is contained in their milk. Therefore, in this process the content ratio of fat in the milk can be adjusted by removing part of the fat by centrifugal separation or the like. By the removal, the fat content rate of the ingredient milk (liquid milk) can be adjusted.

Nutritional components for ingredients of the powdered milk are fats, proteins, carbonhydrate, mineral, vitamin etc. More than one nutritional component, preferably more than two, more preferably all are used. By using the them, the suitable powdered milk or solid milk for nutritional support or enhancement can be produced.

The protein as possible ingredients of powdered milk is peptides or amino acids of various chain length obtained by decomposing milk proteins, milk protein fractions, animal proteins or plant proteins with enzymes. More than one from those proteins is used. Milk proteins are for example casein, whey proteins (alpha-lactoalbumin, beta-lactoalbumin, and the like), whey protein concentrate (WPC), and whey protein isolate (WPI). Animal proteins are for example egg protein. Plant proteins are for instance soybean protein and wheat protein. Amino acids are for example taurine, cystine, cysteine, alginine, and glutamine.

Animal oils and fats, vegetable oils, fractionated oils, hydrogenated oils, and transesterified oils thereof can be used individually or in mixtures as oils and fats serving as possible ingredients for powdered milk. Animal oils and fats are for example milk fat, lard, beef tallow and fish oil. Vegetable oils are for instance soybean oil, rapeseed oil, corn oil, coconut oil, palm oil, palm kernel oil, safflower oil, cotton seed oil, linseed oil, and MCT.

Oligosaccharides, monomeric sugar, polysaccharides, and artificial sweeteners can be used individually or in mixtures as carbohydrate serving as possible ingredients for powdered milk. Oligosaccharides are for example milk sugar, cane sugar, malt sugar, galacto-oligosaccharide, fructo-oligosaccharide, and lactulose. Monomeric sugars are for example grape sugar, fructose and galactose. Polysaccharides are for instance starch, soluble polysaccharides, and dextrin.

Natrium, kalium, calcium, magnesium, iron, copper, zinc, phosphorus, chlorine can be used individually or in mixtures as minerals serving as possible ingredients for powdered milk.

The clearing process (S140) serves to remove tine foreign matter contained in the liquid milk. To remove the matters in the cow milk, well-known means such as a centrifugal separator or a filter can be used.

The sterilization process (S106) serves to kill microorganisms that are contained in water of the liquid milk or milk constituent. Conditions of sterilization are appropriately set corresponding to microorganisms because kinds of the contained microorganisms depend on type of liquid milk.

The homogenization process (S108) is any process for homogenizing the liquid milk. Specifically, particle diameter of solid components such as fat globules contained in the liquid milk is changed smaller, and then the solid components are uniformly dispersed in the cow milk. To reduce the particle diameter of solid components, for example they are passed through a narrow gap under a high applied pressure.

The concentration process (S110) is any process for concentrating the liquid milk prior to the below-described spray drying process. The concentration conditions are appropriately set within the range of not widely metamorphosing liquid milk components. This leads to obtain concentrated milk from liquid milk. In this case water content rate of concentrated milk is for example 35 wt percent to 60 wt percent, preferably 40 wt percent to 60 wt percent, more preferably 40 wt percent to 55 wt percent. By spray drying this concentrated milk, powdered milk having suitable character for producing solid milk can be obtained. In addition, if moisture of liquid milk is few, or disposal amount of liquid milk for the spray drying process is few, this process can be skipped.

The gas dispersal process (S112) is a process for dispersing a gas into the liquid milk, The powdered milk is produced by liquid milk dispersed a gas. At the compaction molding process (S130) powdered milk can be solidified (unified) at a small pressure by using this powdered milk. This brings to obtain solid milk having enough hardness at manufacturing processes. In addition, if moisture of liquid milk is few, or disposal amount of liquid milk for the spray drying process is few, this process can be skipped.

The spray drying process (S114) serves to obtain powdered milk (a powder) by evaporating water present in the liquid milk. Well known means can be employed in the spray drying process.

Powdered milk can be produced by the abovementioned processes. The produced powdered milk is suitable for manufacturing solid milk, specifically in the present invention, the powdered milk is a milk for producing easily the high utility compaction molded body of powdered milk or solid milk having convenience (easily handled). In the above-mentioned compaction molding process (S130) a compaction pressure is adjusted by using this better compaction moldability, and then porosity and hardness of the compaction molded body of powdered milk and solid milk can be controlled and adjusted. More specifically, in case of manufacturing the compaction molded body of powdered milk or the solid milk by compaction molding this powdered milk, porosity of the compaction molded body of powdered milk or the solid milk is enhanced. The compaction molded body of powdered milk or the solid milk having high porosity has high solubility because a solvent is easily entered. Further, the compaction pressure at the time of compaction molding is set to become the hardness (for example 31N to 60N) of solid milk for practical use, or to be enhanced the hardness of the compaction molded body of powdered milk having an enough hardness (for example 31N to 60N) for practical use after the humidification process and the drying process.

Powdered milk produced by the present embodiment has larger particle diameter than the prescribed particle diameter. As demonstrated described below Embodiments, the larger particle diameter of powdered milk is used, the size of pore of solid milk produced from it tends to become larger. The larger pores are, the easier water as a solvent penetrates therein. Therefore, as in this embodiment, a high solubility of the solid milk can be obtained by getting powdered milk having larger particle diameter than the prescribed particle diameter from all powdered milk.

The present invention is specifically described below by Embodiments. However, the present invention is not regulated by the following Embodiments, and it can appropriately modify within a range of apparent to a person skilled in the art. These inventions are included in the present invention.

Evaluation/test method

The methods for evaluating physicality of powdered milk or solid milk using at Embodiments will be explained.

Test example 1 (Evaluation of particle diameter)

Weight of each compartment of sieves (each sieve mesh size is 710 micrometers, 500 micrometers, 355 micrometers, 250 micrometers, 180 micrometers, 150 micrometers, 106 micrometers, 75 micrometers) is measured by the classification method, and then the average particle diameter of powdered milk [micrometer] is calculated based on the proportion of each compartment weight of a sieve to total weight. Namely, in this description average particle diameter means particle diameter calculated by the proportion of each compartment weight of a sieve to total weight after classifying particle by using plural sieves having between 75 micrometers and 710 micrometers of sieve mesh size.

Test Example 2 (Evaluation of porosity)

Porosity of solid milk was calculated as following.

$$Porosity\ [percent] = [1-(W/PV)] * 100$$

In the above mathematical formula, W means weight [g] of solid milk or a compaction molded body of powdered milk, P means density [g/cm$^3$] of measured solid milk or compaction molded body of powdered milk by the Beckman air compaction pycnometer, V means volume [cm$^3$] of calculated solid milk or compaction molded body of powdered milk from thickness measured by the micrometer and mold (die) shape (width and depth).

Test Example 3 (Evaluation of hardness)

The tablet hardness of solid milk or the compaction molded body of powdered milk (before hardening solid milk) is measured by a load cell tablet hardness meter manufactured by Okada Seiko co., ltd. Solid milk or the compaction molded body of powdered milk is pushed by a fracture terminal of this hardness meter (width 1mm) towards short axis of solid milk or the compaction molded body of powdered milk of a rectangular parallelepiped at a constant speed of 0.5mm/s. the hardness is measured by calculating a loading [N] when fracturing the solid milk or the compaction molded body of powdered milk. Namely, the loading calculated by the abovementioned means hardness (tablet hardness) [N] of the solid milk or the compaction molded body of powdered milk.

Test Example 4 (Evaluation of solubility)

The solubility of solid milk is evaluated wholly based on the following two test methods, the first test method and the second method.
The first method is a method for checking visually solubility of solid milk. Specifically one or more than two of solid milk which was 5.6g a piece was put into a bottle, and then the prescribed amount of hot water of 50 degrees C (test liquid) was poured into the bottle, and left for prescribed period. By adjusting a number of solid milk and weight of hot water, concentration of solid milk (solute concentration) in the content of the bottle is adjusted. In the present Embodiments, solubility of solid milk was evaluated by plural test methods, such as changing the solute concentration, or changing a number of pieces of solid milk or weight of hot water but keeping solute concentration.
After that, the lid of the bottle was closed and the bottle was shaked for prescribed period. Just after shaking, all content of the bottle was poured to a rectangular tray. Continuously, it was conducted with eye whether there was an insolubilised lump in the content on the tray. If there are insolubilised lumps, a number of pieces of lumps and size (the length of the longest part) were measured, and further each lump was cut and it was conducted with eye whether the lump absorbed water. The insolumilized lump means a part of the solid milk for the test which is insoluble in the test liquid (the part remained insoluble).
The results of the first test method are divided into 6 categories described below. Each category is allocated a score 0 to 5 respectively. The score means an index for indicating the degree of solubility of solid milk. The smaller the score is, the better solubility of solid milk is.
Score 0 : there is no insolubilised lump
Score 1 : when there are one or more insolubilised lumps, size of each lump is 5mm or less, and inside of the lump absorbs water (each lump is slurry, or part of lump is soluble state).
Score 2 : when there are one or more insolubilised lumps, size of each lump is 5mm or less, and at least one of the lump inside does not absorb water.
Score 3 : when there are one or more insolubilised lumps, size of each lump is more than 5mm and 10mm or less, and at least one of the lump inside does not absorb water.
Score 4 : when there are one or more insolubilised lumps, size of each lump is more than 10mm and 20mm or less, and at least one of the lump inside does not absorb water.

Score 5 : when there is at least one insolubilised lump, size of the lump is 20mm or more.

The second test method is a method for evaluating the solubility of the solid milk quantitatively like a degree of solubility. Specifically, two pieces of solid milk (11.2g) was put into the bottle, and then 80g (80mL) of 50 degrees C of hot water (test liquid) was poured into the bottle, so that the solute concentration was 14 wt percent. It was left for 10 seconds.

After that, the bottle was rotated relatively gently like describing a circle by hand (specifically 4 times per second) and was shaked for 5 seconds. Just after 5 seconds, all content of the bottle was provided into a sieve which weight was known. The sieve was 500 micrometers (32 mesh). Mass [g] of undissolved residue on the sieve is measured. Specifically, after wiping off the residue and the surface of the sieve to avoid dropping out the residue on the sieve, gross mass of the sieve and the residue is measured. The mass of the residue on the sieve is calculated based on the differences between the gross mass and the mass of the sieve. Additionally, in this second test method it is indicated that the less mass of residue is, the better solubility of the solid milk is.

Test Example 5 (Evaluation of pore area)

In order to observe many pores on surface of solid milk, digital microscope manufactured by Omron corporation, FZ2 series was used. It was shown that each pore had different shape. Two tests for measuring pore area of solid milk surface were performed. The first test method is to measure a number of pores and area of image region corresponding to pore area in an observation area based on the image took by the observation area (one eye-sight) 800 x 800 pixel, distance conversion 100 pixel = 0.136 mm, shutter speed 1/1000 second after setting colour range of pores and adjusting brightness as an image processing so that the pores on the surface of solid milk be clearly identified. The average of pore area is calculated based on total area of pores within the eye-sight area dividing by number of pieces. This operation was performed in 50 eye-sights, and total area of pores was calculated by image processing. The second test method is that the top three pores having a large pore area are picked up from the observation area under the same image processing conditions as the first test method, and that average of these pore area is defined as pore area of the surface of the solid milk.

**Reference Example**

When solid milk is produced, firstly powdered milk is produced. Specifically, liquid milk as an ingredient of powdered milk is obtained by adding milk component, proteins, carbohydrate, minerals and vitamins to water and mixing, further adding and mixing fats if needed (S102). Then, by performing each process such as the clearing, the sterilization, homogenization, concentration, gas dispersal, spray drying (S104-S114), powdered milk is obtained from adjusted liquid milk. The analyzed component of the obtained powdered milk 100 g comprised fats 18g, proteins 15g, carbohydrate 60g, and other 7g. In addition, average particle diameter of powdered milk (no classification state) was 273 micrometers.

Embodiment 1

The powdered milk obtained by the Reference Example was classified by sieves having various mesh size (sieve mesh size 150, 180, 250, 355,425, 500, and 600 micrometers), and the solid milk is produced from the classified powdered milk, or not classifying powdered milk itself (no classified milk), as an ingredient of solid milk.

Specifically, the powdered milk obtained by the manufacturing method of the Reference Example was compaction molded to make a rectangular parallelepiped of width 2.4 cm and depth 3.1 cm as an outward form in a single-punch tableting machine (manufactured by Okada Seiko Co., N-30E) (S130). Amount of usage of powdered milk was adjusted to 5.6 g of solid milk after the humidification process and the drying process. When the pressure at the time of compaction molding was adjusted to have 46-47 percents of porosity of the compaction molded body of powdered milk after compaction molding, thickness of the compaction molded body of powdered milk was about 1.3 cm.

In the humidification process (S140), the combination oven (Combi oven, manufactured by Fujimak Co. "FCCM6") was used as a humidifier. The room temperature and humidity in the humidifier was kept 65 degrees C and 100 percents RH respectively. Under these conditions, the compaction molded body was left for 45 seconds (humidification time). At the drying process (S160), air thermostatic oven (manufactured by Yamato Scientific Co., Ltd, "DK600") was used as a drying chamber. The compaction molded body of powdered milk was dried under 95 degrees C for 5 minutes. Solid milk was obtained by this method, and then it was evaluated by Test Example 1-5. The result is shown in Table 1.

Table 1

| | ingredient powdered milk | | | | | solid milk | | | |
|---|---|---|---|---|---|---|---|---|---|
| | average particle diameter [μm] | mesh size 355 μm sieve passed [%] | mesh size 250 μm sieve passed [%] | mesh size 180 μm sieve passed [%] | yield constant of classified powder on the sieve [%] | mass [g] | thickness [mm] | porosity [%] | hardness [N] |
| non-classified powdered milk | 273 | 75 | 46 | 17 | 100 | 5.6 | 12.7 | 46 | 40 |
| mesh size 150 μm classified powder on the sieve | 303 | 75 | 42 | 7 | 91 | 5.6 | 12.7 | 46 | 39 |
| mesh size 180 μm classified powder on the sieve | 324 | 69 | 33 | 2 | 80 | 5.6 | 12.7 | 46 | 38 |
| mesh size 250 μm classified powder on the sieve | 393 | 47 | 3 | 0 | 49 | 5.6 | 12.6 | 46 | 42 |
| mesh size 355 μm classified powder on the sieve | 469 | 8 | 1 | 0 | 20 | 5.6 | 12.6 | 46 | 37 |
| mesh size 425 μm classified powder on the sieve | 520 | 2 | 1 | 0 | 9 | 5.6 | 12.6 | 45 | 38 |
| mesh size 500 μm classified powder on the sieve | 637 | 2 | 1 | 0 | 6 | 5.6 | 12.6 | 45 | 37 |
| mesh size 600 μm classified powder on the sieve | 899 | 1 | 0 | 0 | 2 | 5.6 | 12.6 | 45 | 36 |

| | solid milk | | | | |
|---|---|---|---|---|---|
| | solubility test | | | average of surface pore area (first test method) [mm$^2$] | average of surface pore area (second test method) [mm$^2$] |
| | 2 pieces 15 sec [score] | 4 pieces 15 sec [score] | 5 pieces 15 sec [score] | | |
| non-classified powdered milk | 2 | 4 | 4 | 0.016 | 0.019 |
| mesh size 150 μm classified powder on the sieve | 2 | 4 | 5 | 0.017 | 0.027 |
| mesh size 180 μm classified powder on the sieve | 2 | 4 | 4 | 0.016 | 0.026 |
| mesh size 250 μm classified powder on the sieve | 1 | 4 | 4 | 0.022 | 0.033 |
| mesh size 355 μm classified powder on the sieve | 0 | 2 | 3 | 0.031 | 0.051 |
| mesh size 425 μm classified powder on the sieve | 0 | 2 | 3 | 0.032 | 0.051 |
| mesh size 500 μm classified powder on the sieve | 0 | 2 | 3 | 0.030 | 0.053 |
| mesh size 600 μm classified powder on the sieve | 0 | 2 | 3 | 0.037 | 0.061 |

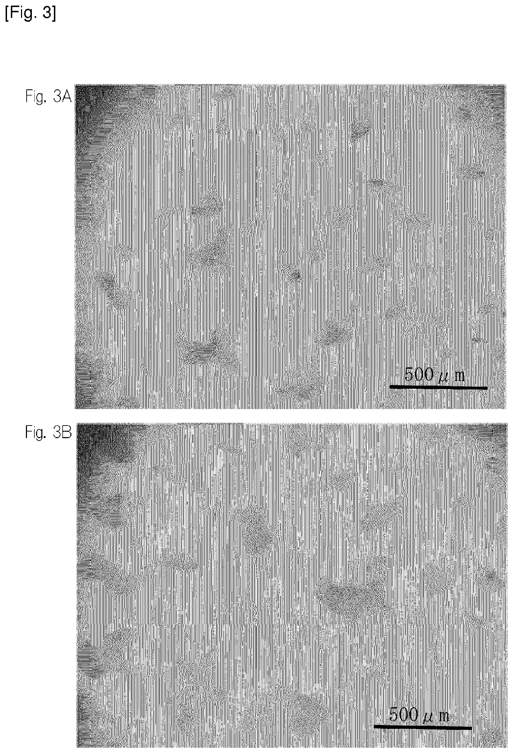

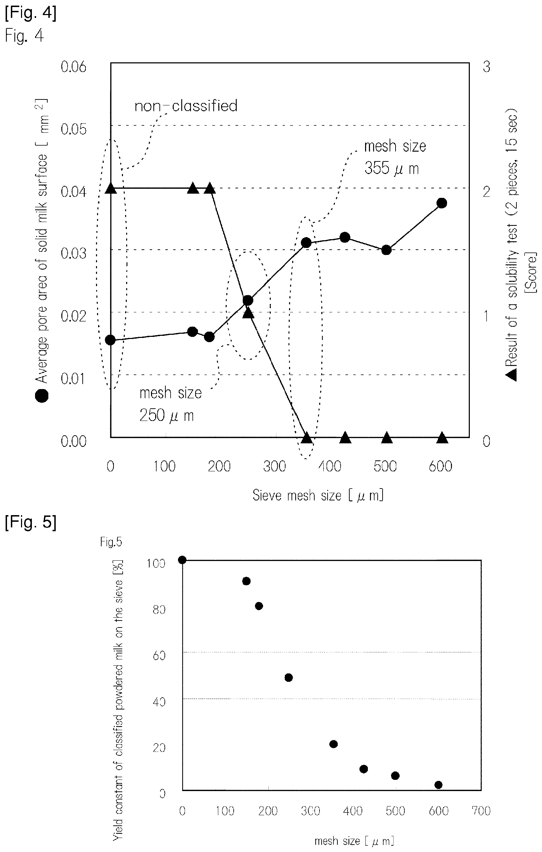

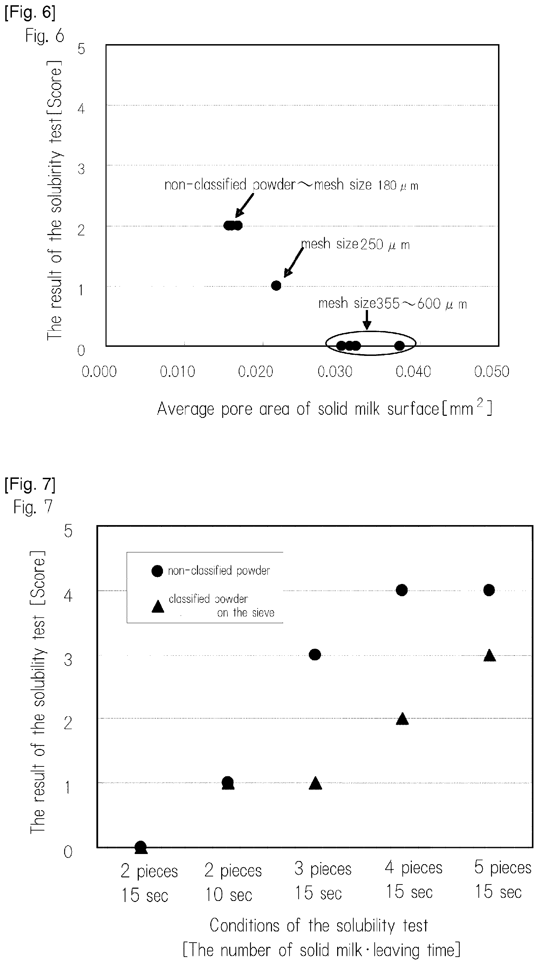

FIG. 3A shows a photograph instead of a figure indicating surface of the solid milk manufactured from non classification powdered milk. FIG. 3B shows a photograph instead of a figure indicating surface of the solid milk manufactured from classified powdered milk. FIG.4 shows that mesh size of the sieves, average pore area of solid milk surface, and a relationship between mesh size of sieves and solubility (scores in case of dissolving two pieces of solid milk for 15 seconds). FIG. 5 shows a relationship between mesh size of sieves and yield constant of classified powdered milk on the sieve. FIG 6 shows that a relationship between average pore area of the solid milk surface and solubility (scores in case of dissolving two pieces of solid milk for 15 seconds).

Compared to FIG.3A and FIG.3B, it shows that solid milk having large pores can be obtained by classifying. According to Table 1, regardless of the degree of the classification, porosity of the solid milk was almost constant. In addition, in accordance with Table 1 and FIG.4, the larger the mesh size was, the larger the average of pore area of the solid milk surface was, and further the higher the solubility of the solid milk was. According to Table 1, the average of pore area of the solid milk surface was, and further the higher the solubility of the solid milk was. According to Table 1, the average of pore area of solid milk surface is increased 1.2 times to 2.5 times as increasing mesh size in the first test method, and 1.6 times to 3.3 times in the second test method. On the other hand, according to Table 1, hardness of the obtained solid milk was not changed very much when the mesh size of sieves was changed. Furthermore, in accordance with Figure 1, although porosity is constant, difference of mesh size (difference of particle diameter) may make solubility change widely.

Regarding to the scores in case of dissolving two pieces of solid milk for 15 seconds, the score of solubility of obtained solid milk from classified powdered milk of 250 micrometers of mesh size is 1, compared to the score 2 of non classified powdered milk, the solubility was improved. However, when using sieves of 180 micrometers of mesh size, the score of solubility was equal to the score of non classified powdered milk. Therefore, it is considered that solubility of solid milk is enhanced but prescribed hardness of solid milk is still kept when powdered milk is classified by the sieve having 200 micrometers or more of mesh size, and the classified powdered milk on the sieve is used as the ingredient of solid milk. However, the yield constant of classified solid milk is 2 percents in case of using a sieve of 600 micrometers of mesh size. Therefore, when the mesh size becomes large, yield rate is declined, Consequently, preferably it is classified by using a sieve having between 200 micrometers and 700 micrometers (both including), or it can be classified by using a sieve having between 300 micrometers and 500 micrometers (both including), or a sieve having between 300 micrometers and 400 micrometers (both including).

Namely, by using the classified powdered milk having 1.3 times to 3.6 times (both including) (preferably 1.5 times to 3.0 times) of average particle diameter as much as the non classified powdered milk, solid milk having better hardness and solubility can be obtained.

According to Table 1, there is not so much differences among non classified powdered milk, classified powdered milk by a sieve having 150 micrometers of mesh size, and the one by a sieve having 180 micrometers of mesh size in terms of average pore area of surface. Moreover, the larger the mesh size of a sieve is, the larger of average of pore area of surface is. Namely, according to Table 1, by using the classified powdered milk having 1.2 times to 2.5 times (both including) (preferably 1.5 times to 2.2 times) of average pore area of solid milk surface as much as the non classified powdered milk, solid milk having better hardness and solubility can be obtained.

Additionally, according to Table 1, insoluble matter of solid milk manufactured by non classified powdered milk was a lump without absorbing water. This is assumed that absorbing speed from surface to inside is low and decay of solid milk is not smooth.

Embodiment 2

In the Embodiment 2, the solid milk manufactured from powdered milk having different free fat or fat content was experimented. The results are shown in Table 2 including the composition of powdered milk A and B.

Table 2

| | | | powdered milk A | | powdered milk B |
| | | | classified powder on the sieve | non-classified powder | non-classified powder |
|---|---|---|---|---|---|
| composition | protein (casein protein) | [%] | 15 (9.75) | | 12 (4.8) |
| | fat (free fat) | [%] | 18 (0.4) | | 26 (1.5) |
| | carbohydrate | [%] | 60 | | 57 |
| | ash | [%] | 4 | | 2 |
| | water/other | [%] | 3 | | 3 |
| average particle diameter of powder | | [μm] | 389 | 267 | 270 |

(continued)

|  |  |  | | powdered milk A | | powdered milk B |
| --- | --- | --- | --- | --- | --- | --- |
|  |  |  | | classified powder on the sieve | non-classified powder | non-classified powder |
| solubility test | undissolved residue (50°C · 5sec) | | [g] | 3.4 | 5.9 | 3.5 |
|  | solubility (50°C - 15 sec) | 2pieces/ 80mL | [score] | 0 | 0 | 0 |
|  |  | 3pieces/ 120mL | [score] | 0 | 1 | 0 |
|  |  | 4pieces/ 160mL | [score] | 1 | 2 | 1 |
|  |  | 5pieces/ 120mL | [score] | 2 | 3 | 1 |

The sieves having 355 micrometers of mesh size was used for the classification. As shown in Table 2, for example in the powdered milk A, undissolved residue of solid milk manufactured from non classified powdered milk in a solubility test was 5.9g. On the other hand, the residue of solid milk manufactured from classified powdered milk was 3.4 g. Furthermore, in the solubility test, for example, in case 5 pieces of solid milk were dissolved in water of 50 degrees C, 120ml, the score after leaving 15 seconds was 3 in the solid milk manufactured from non classified powdered milk, but it was 2 in the solid milk manufactured from classified powdered milk. Thus, in the powdered milk A, compared to the solid milk manufactured from non classified powdered milk, solubility of the solid milk manufactured from classified powdered milk was enhanced.

In addition, in the powdered milk B, solubility of solid milk was relatively good although using non classified powdered milk. Therefore, in the present embodiment, in case of 1 wt percent or less of free fat or 7 wt percent or more of proteins especially casein protein, the present invention of a manufacturing method was preferably performed.

Embodiment 3

In Embodiment 3, compared to the powdered milk A and B in Embodiment 2, powdered milk having less content of free fat or fat, but more content of protein especially casein protein was used and the effectiveness of the manufacturing method in the present invention was evaluated. The results are shown in Table 3.

Table 3

|  |  | | powdered milk C | |
| --- | --- | --- | --- | --- |
|  |  | | classified powder on the sieve | non-classified powder |
| composition | protein (casein protein) | [%] | 22 (15.5) | |
|  | fat (free fat) | [%] | 5 (0.1) | |
|  | carbohydrate | [%] | 61 | |
|  | ash | [%] | 7 | |
|  | water/other | [%] | 5 | |
| overage particle diameter of powder | | [$\mu$m] | 303 | 192 |
| solubility test | solubility (50°C · 120sec) (2pieces/ 80mL) | [score] | 0 | 2 |

As shown in Table 3, in case two pieces of solid milk were dissolved in water of 50 degrees C, 80 ml, the score after leaving for 120 seconds was 2 in the solid milk manufactured from non classified powdered milk, but it was 0 in the solid milk manufactured from classified powdered milk. Therefore, in case of containing less free fat or fat and more proteins especially casein protein, the effect of the present invention of a manufacturing method was noted.

Namely, according to the present embodiment, in case of 0.1 wt percent or less of free fat (preferably, in case substantially free fat is not included), or in case of 12 wt percent or more of casein protein, the present invention of a manufacturing method of solid milk is preferably performed. By the way, in the Japanese Patent Publication No.4062357 (the Patent Document 1) the compaction moldability is enhanced by free fat which has a role of a lubricant or an adhesive. Furthermore, it is considered that it is difficult to produce solid milk having high solubility and keeping hardness when solid milk is manufactured from powdered milk having less fat or free fat. However, according to the present invention, although powdered milk which is considered difficult for producing solid milk is used, the solid milk having good hardness and solubility can be obtained.

Embodiment 4

In Embodiment 4, it is certified that the classification has an effect of enhancing solubility when the powdered milk having small particle diameter is used for manufacturing solid milk. The powdered milk of the reference example was classified by a sieve having 250 micrometers of mesh size, and solid milk was manufactured from classified powdered milk on the sieve or non classified powdered milk itself (non classified powder) as an ingredient by the same method as the Embodiment 1. The powdered milk used as ingredients and the manufactured solid milk were evaluated by Test Example 1-4. The results are shown in Table 4. Furthermore, scores under various conditions in a solubility test are shown in FIG.7.

Table 4

| | ingredient powdered milk | | | |
|---|---|---|---|---|
| | average particle diameter [$\mu$m] | 355 $\mu$m sieve passed [%] | 250 $\mu$m sieve passed [%] | 180 $\mu$m sieve passed [%] |
| non-classified powder | 196 | 99 | 90 | 25 |
| classified powder on the sieve | 262 | 99 | 20 | 1 |

| | solid milk after hardening | | | | | | | |
|---|---|---|---|---|---|---|---|---|
| | | | | | solubility | | | |
| | mass [g] | thickness [mm] | porosity [%] | hardness [N] | 2pieces 15sec [score] | 3pieces 15sec [score] | 4pieces 15sec [score] | 5pieces 15sec [score] |
| non-classified powder | 5.6 | 12.7 | 46 | 49 | 0 | 3 | 4 | 4 |
| classified powder on the sieve | 5.6 | 12.7 | 46 | 58 | 0 | 1 | 2 | 3 |

According to Table 4 and FIG. 7, the solubility is enhanced by using classified powdered milk on the sieve, compared to the non classified powdered milk. The average of particle diameter of non classified powdered milk is 196 micrometers, it is 77 micrometers smaller than 273 micrometers which is the average of non classified powdered milk in Embodiment 1. Thus, when solid milk is manufactured by using powdered milk having small particle diameter like this, the prescribed hardness can be kept and solubility can be enhanced by using classified powdered milk.

## Industrial Applicability

The present invention can be applied to the food industry.

## Claims

**1.** A method for manufacturing solid milk, comprising:

a classification process for obtaining powdered milk having a larger particle diameter than prescribed particle diameter by classifying powdered milk which is an ingredient of the solid milk, wherein the classification process is a process for using a sieve the mesh size of which is 200 micrometers to 700 micrometers;
a compaction molding process for obtaining a compaction molded body of the powdered milk remaining on the sieve after the classification process;
a humidification process for humidifying the compaction molded body of the powdered milk after the compaction molding process, wherein the humidification process is carried out in a high humidity environment the high humidity environment being 60 percent RH to 100 percent RH; and
a drying process for drying the compaction molded body of the powdered milk after the humidification process.

**2.** The method for manufacturing solid milk according to claim 1, wherein the humidification time in the humidification process is 5 seconds to 1 hour and the humidification process is executed at a temperature of 30° C to 100° C.

**3.** The method for manufacturing solid milk according to claim 1 or claim 2, wherein the powdered milk has a free fat content ratio of 0.5 wt % to 4 wt %.

**4.** The method for manufacturing solid milk according to any preceding claim, wherein the powdered milk has a water content ratio of 1 wt % to 4 wt %.

**5.** The method for manufacturing solid milk according to any preceding claim, wherein the solid milk comprises fats, carbohydrate, proteins, minerals, vitamins and water.

**6.** The method for manufacturing solid milk according to any preceding claim, wherein the solid milk comprises oligosaccharides.

## Patentansprüche

**1.** Verfahren zur Herstellung von Milch in fester Form, umfassend:

einen Klassifizierungsvorgang zum Gewinnen von Milchpulver mit einem größeren Teilchendurchmesser als dem vorgeschriebenen Teilchendurchmesser durch Klassifizieren von Milchpulver, bei dem es sich um einen Inhaltsstoff der Milch in fester Form handelt, wobei es sich bei dem Klassifizierungsvorgang um einen Vorgang zur Verwendung eines Siebs handelt, dessen Maschengröße 200 Mikrometer bis 700 Mikrometer beträgt;
einen Pressformungsvorgang zum Gewinnen eines Pressformkörpers des Milchpulvers, das nach dem Klassifizierungsvorgang auf dem Sieb bleibt;
einen Befeuchtungsvorgang zum Befeuchten des Pressformkörpers des Milchpulvers nach dem Pressformungsvorgang, wobei der Befeuchtungsvorgang in einer Umgebung mit hoher Luftfeuchtigkeit durchgeführt wird, wobei es sich bei der Umgebung mit hoher Luftfeuchtigkeit um 60 Prozent RH bis 100 Prozent RH handelt; und
einen Trocknungsvorgang zum Trocknen des Pressformkörpers des Milchpulvers nach dem Befeuchtungsvorgang.

**2.** Verfahren zur Herstellung von Milch in fester Form nach Anspruch 1, wobei die Befeuchtungszeit beim Befeuchtungsvorgang 5 Sekunden bis 1 Stunde beträgt und der Befeuchtungsvorgang bei einer Temperatur von 30° C bis 100° C ausgeführt wird.

**3.** Verfahren zur Herstellung von Milch in fester Form nach Anspruch 1 oder Anspruch 2, wobei das Milchpulver ein Freier-Fettgehalt-Verhältnis von 0,5 Gew.-% bis 4 Gew.-% aufweist.

**4.** Verfahren zur Herstellung von Milch in fester Form nach einem vorhergehenden Anspruch, wobei das Milchpulver ein Wassergehalt-Verhältnis von 1 Gew.-% bis 4 Gew.-% aufweist.

**5.** Verfahren zur Herstellung von Milch in fester Form nach einem vorhergehenden Anspruch, wobei die Milch in fester Form Fette, Kohlenhydrat, Proteine, Mineralien, Vitamine und Wasser umfasst.

**6.** Verfahren zur Herstellung von Milch in fester Form nach einem vorhergehenden Anspruch, wobei die Milch in fester Form Oligosaccharide umfasst.

**Revendications**

**1.** Procédé de fabrication de lait solide comprenant :

un processus de classement pour obtenir un lait en poudre ayant un diamètre de particule supérieur au diamètre de particule prescrit par classement du lait en poudre qui est un composant du lait solide, le processus de classement étant un processus d'utilisation d'un tamis dont la taille de maille est de 200 micromètres à 700 micromètres ;
un processus de moulage par compactage pour obtenir un corps moulé par compactage du lait en poudre restant sur le tamis après le processus de classement ;
un processus d'humidification pour humidifier le corps moulé par compactage du lait en poudre après le processus de moulage par compactage, le processus d'humidification étant conduit dans un environnement à humidité élevée, l'environnement à humidité élevée étant de 60 % HR à 100 % HR ; et
un processus de séchage pour sécher le corps moulé par compactage du lait en poudre après le processus d'humidification.

**2.** Procédé de fabrication de lait solide selon la revendication 1, dans lequel le temps d'humidification dans le processus d'humidification est de 5 secondes à 1 heure et le processus d'humidification est exécuté à une température de 30 °C à 100 °C.

**3.** Procédé de fabrication de lait solide selon la revendication 1 ou la revendication 2, dans lequel le lait en poudre a un taux de matière grasse libre de 0,5 % en poids à 4 % en poids.

**4.** Procédé de fabrication de lait solide selon l'une quelconque des revendications précédentes, dans lequel le lait en poudre a un rapport de teneur en eau de 1 % en poids à 4 % en poids.

**5.** Procédé de fabrication de lait solide selon l'une quelconque des revendications précédentes, dans lequel le lait solide comprend des matières grasses, des glucides, des protéines, des minéraux, des vitamines et de l'eau.

**6.** Procédé de fabrication de lait solide selon l'une quelconque des revendications précédentes, dans lequel le lait solide comprend des oligosaccharides.

[Fig. 1]
Fig. 1

Solid Milk Manufacturing

Powdered Milk Manufacturing — S100

Classification — S120

Compaction Molding — S130

Humidification — S140

Drying — S160

End

[Fig. 2]

Fig. 2

S100

Powdered Milk
Manufacturing

Ingredient Milk
Adjusting — S102

Clearing — S104

Sterilization — S106

Homogenization — S108

Concentration — S110

Gas Dispersal — S112

Spray Drying — S114

Return

[Fig. 3]

Fig. 3A

Fig. 3B

[Fig. 4]

Fig. 4

[Fig. 5]

[Fig. 6]

Fig. 6

[Fig. 7]

Fig. 7

**REFERENCES CITED IN THE DESCRIPTION**

**Patent documents cited in the description**

- JP 2008335155 A
- JP 4062357 B
- WO 2007077970 A